# EUROPÄISCHE PATENTANMELDUNG

(11) **EP 3 366 397 A1**
(43) Veröffentlichungstag der Anmeldung: **29.08.2018**
(21) Anmeldenummer: 18158396.4
(22) Anmeldetag: 23.02.2018
(51) Int. Cl.: B23B 31/20

(54) **SPANNZANGE, VERFAHREN ZUR HERSTELLUNG EINER SPANNZANGE UND SPANNFUTTER**

(30) Priorität: 27.02.2017 DE 102017104057
(71) Anmelder: Präzisions-Drehteile Löcher GmbH, 73463 Westhausen (DE)
(72) Erfinder: Loecher, Anton, 73463 Westhausen (DE)
(74) Vertreter: Schmid, Wolfgang

(57) **Zusammenfassung**

Eine Spannzange (1) zum Spannen eines Werkzeugs (2) weist einen Spannzangenkörper (3) auf, der eine in Längsrichtung (x) desselben verlaufende Bohrung (4) für das Werkzeug (2) aufweist. Der Spannzangenkörper (3) weist einen über seine gesamte Erstreckung in Längsrichtung (x) verlaufenden Schlitz (5) auf. Am Umfang der Bohrung (4) und am Außenumfang des Spannzangenkörpers (3) sind jeweils mehrere Ausnehmungen (6) vorgesehen, die jeweils paarweise derart zueinander angeordnet sind, dass zwischen den Ausnehmungen (6) Stege (7) gebildet sind.

## Beschreibung

Die Erfindung betrifft eine Spannzange zum Spannen eines Werkzeugs, mit einem Spannzangenkörper, der eine Bohrung für das Werkzeug aufweist. Des Weiteren betrifft die Erfindung ein Verfahren zur Herstellung einer solchen Spannzange sowie ein Spannfutter mit einem Futterkörper.

Ein gattungsgemäßes Spannfutter ist in der CH 422 474 A beschrieben. Hierbei ist eine Überwurfmutter vorgesehen, welche auf eine konische Fläche der Spannzange drückt, um dieselbe gegen einen konischen Hohlraum der Spannzange einerseits und gegen das in der Spannzange aufgenommene Werkzeug andererseits zu pressen. Der Nachteil dieser bekannten Lösung liegt insbesondere in deren mangelnder Genauigkeit, wodurch das Werkzeug nicht exakt gespannt werden kann. Beispielsweise bei Fräswerkzeugen kann dies dazu führen, dass dasselbe nicht mit sämtlichen Schneiden mit dem zu bearbeitenden Werkstück in Eingriff ist, so dass keine exakte Bearbeitung möglich und das Werkzeug außerdem einem hohen Verschleiß unterworfen ist.

Aus diesem Grund wurden unter anderem Spannfutter mit Schneckengetrieben zum Spannen des Werkzeugs entwickelt, die jedoch eine sehr aufwändige Fertigung notwendig machen und die Problematik der durch das Spannmittel auftretenden Unwucht nicht vollständig beseitigen können. Als Beispiel für solche Spannfutter mit Schneckengetrieben wird auf die DE 20 2008 013 763 U1 und die EP 1 109 642 B1 verwiesen.

Eine andere Weiterentwicklung stellen Spannfutter dar, welche das Werkzeug ebenfalls in einer Spannzange aufnehmen, das Werkzeug jedoch mittels eines Schrumpfsitzes spannen. Ein Beispiel für ein derartiges Spannfutter kann der EP 1 222 984 B1 entnommen werden. Hierbei wird vor dem Einführen des Werkzeugs die Spannzange erwärmt und anschließend abgekühlt, wodurch sich ihr durch das vorhergehende Erwärmen vergrößerter Durchmesser verringert und das Werkzeug gespannt werden kann.

Nachteilig bei diesen Spannfuttern ist jedoch der sehr große Aufwand und die lange Zeit, die der Ein- und Ausspannvorgang des Werkzeugs in Anspruch nehmen. Auch die Materialermüdung durch das häufige Aufwärmen und Abkühlen des Spannfutters stellt einen großen Nachteil dieser Bauform dar. Darüber hinaus werden für ein solches Spannfutter zusätzliche Anlagen zum Erwärmen desselben benötigt, die eine erhebliche Steigerung der zur Anschaffung des Spannfutters erforderlichen Investitionen nach sich ziehen.

Des Weiteren sind zum Spannen von Werkzeugen mit rundem Querschnitt, wie beispielsweise Fräsern oder Bohrern, in jüngster Zeit häufiger hydraulisch betätigte Spannfutter eingesetzt worden, die jedoch ebenfalls einen sehr hohen Aufwand erfordern und entsprechend teuer sind.

Ein weiteres Spannfutter ist aus der DE 10 2009 046 037 B4 bekannt. Dabei weist die Spannzange in radialer Richtung verlaufende, sich abwechselnde Vertiefungen und Erhebungen auf, was zu einer hohen Elastizität der Spannzange und damit einer guten Spannwirkung führt. Der Nachteil dieses bekannten Spannfutters liegt in dessen Verriegelungsmechanismus, der eine auf eine Schrägfläche der Spannzange wirkende Schließschraube aufweist und eine höhere Spanngenauigkeit des Spannfutters verhindert.

Ein weiteres Spannfutter ist aus der DE 361 919 A bekannt. Dabei werden zwischen dem Futterkörper und dem Verriegelungselement sowie zwischen der Spannzange und dem Verriegelungselement jeweilige Gewindeverbindungen eingesetzt, die unterschiedliche Steigungen aufweisen. Allerdings ergeben sich bei diesem Spannfutter Probleme beim Lösen desselben.

Die DE 10 2009 035 982 A1 beschreibt ein weiteres Spannfutter, das jedoch einen relativ komplizierten Aufbau besitzt.

In der DE 10 2009 060 678 A1 ist ein Werkzeugträger mit einer Spannzangenaufnahme, einer Spannzange, einer Spannmutter und einem Werkzeugeinsatz beschrieben, bei dem die Spannzange und der Werkzeugeinsatz an unterschiedlichen Funktionsflächen in dem Werkzeugträger fixiert und positioniert sind.

Eine ähnliche Spannzange ist auch aus der DE 20 2012 010 701 U1 bekannt.

Hinsichtlich des weiteren Stands der Technik bei Spannzangen wird außerdem auf die FR 2 369 775 A1, US 2,573,325, US 2,580,067 und DE 44 05 242 B4 verwiesen.

Ein großes Problem sämtlicher bekannter Spannfutter besteht außerdem darin, dass die in dem Umfeld derselben auftretenden Verschmutzungen, wie zum Beispiel Späne, Schmiermittel oder Kühlflüssigkeiten, meist ungehindert in das Innere des Spannfutters eindringen und dort für Ungenauigkeiten oder gar Fehler beim Spannen sorgen können.

Um diese Probleme zu vermeiden, wurde in der EP 3 006 143 A1 ein Spannfutter vorgeschlagen, bei dem ein als Spannmutter ausgebildetes Verriegelungselement eine durch eine Schrägfläche gebildete Durchmesserverringerung aufweist, die mit einer Schrägfläche der Spannzange derart korrespondiert, dass sich ein sehr exaktes Spannen des Werkzeugs und damit ein entsprechend genauer Rundlauf desselben ergeben. In der Praxis hat sich jedoch erwiesen, dass auch diese Spannzange nicht in der Lage ist, das Werkzeug mit einer ausreichenden Genauigkeit zu spannen.

Des Weiteren führt häufig auch die Herstellung der Spannzangen zu Schwierigkeiten, insbesondere wenn dieselben Schlitze aufweisen, da es in diesem Fall erforderlich ist, die beim Herstellen der Schlitze entstehenden Grate zu entfernen, was meist mit einem hohen Aufwand verbunden ist.

Es ist daher Aufgabe der vorliegenden Erfindung, eine Spannzange und ein zur Aufnahme dieser Spannzange geeignetes Spannfutter zu schaffen, mit denen ein noch exakteres Spannen des Werkzeugs möglich ist. Des Weiteren sollte die Spannzange möglichst einfach hergestellt werden können.

Erfindungsgemäß wird diese Aufgabe durch die in Anspruch 1 genannten Merkmale gelöst.

Die erfindungsgemäße Spannzange weist im Gegensatz zu den bekannten Spannzangen lediglich einen Schlitz auf, der jedoch über die gesamte Erstreckung des Spannzangenkörpers in Längsrichtung desselben verläuft. Dadurch wird die Fertigung der erfindungsgemäßen Spannzange wesentlich vereinfacht, da ein einzelner Schlitz sehr viel einfacher hergestellt werden kann als eine Vielzahl von Schlitzen. Da die Breite des Schlitzes annähernd beliebig gewählt werden kann, lassen sich mit ein und derselben Spannzange vorteilhafterweise Werkzeuge mit einem geringfügig unterschiedlichen Durchmesser spannen.

Ein weiterer Vorteil der erfindungsgemäßen Lösung besteht darin, dass aufgrund der erheblicheren Verringerung der Anzahl an Schlitzen eventuell in den Bereich der Spannzange gelangende Verschmutzungen im Prinzip keine Störung darstellen können, zumal die Spannzange wesentlich einfacher gereinigt werden kann als dies bei bekannten Lösungen der Fall ist.

Die Elastizität des Spannzangenkörpers und damit die Möglichkeit, ein in die Bohrung desselben eingeführtes Werkzeug zu spannen, ergibt sich durch die Stege, welche durch die Ausnehmungen am Umfang der Bohrung und am Außenumfang des Spannzangenkörpers erzeugt werden, da diese Stege mit einer vergleichsweise geringen Kraft umgeformt werden können, um so den Durchmesser der Bohrung zu verkleinern.

Die erfindungsgemäße Spannzange gewährleistet gegenüber den bekannten Lösungen eine sehr viel höhere Genauigkeit beim Einspannen eines Werkzeugs, da sich beim Schließen des Spannzangenkörpers um das in die Bohrung desselben eingeführte Werkzeug keinerlei Verspannungen des Spannzangenkörpers ergeben.

In einer sehr vorteilhaften Weiterbildung der Erfindung kann vorgesehen sein, dass die Breite der Stege in radialer Richtung des Spannzangenkörpers 0,3 bis 0,8 mm, vorzugsweise, 0,4 bis 0,6 mm, beträgt. Eine solche Breite der Stege hat sich hinsichtlich der Elastizität des Spannzangenkörpers einerseits und einer ausreichenden Festigkeit desselben andererseits als sehr gut geeignet erwiesen.

Wenn in einer weiteren vorteilhaften Ausgestaltung der Erfindung der Schlitz wenigstens annähernd in der Mitte eines der Stege verläuft, so ist zum einen aufgrund der geringen Dicke des Spannzangenkörpers in diesem Bereich nur eine geringe Zerspanung notwendig, und es ist zum anderen nicht erforderlich, einen beim Herstellen des Schlitzes eventuell entstehenden Grat vollständig zu entfernen, da dieser aufgrund der zurückversetzten Anordnung des Schlitzes in dem Steg nicht in die zur Aufnahme des Werkzeugs dienenden Bohrung ragen und damit auch keine Behinderung für das in der Bohrung aufgenommene Werkzeug darstellen kann.

Da der Spannzangenkörper der erfindungsgemäßen Spannzange einen vergleichsweise einfachen Aufbau besitzt, kann in einer sehr vorteilhaften Weiterbildung der Erfindung vorgesehen sein, dass der Spannzangenkörper als Gussteil ausgebildet ist. Dies führt zu einer weiteren wesentlichen Kostenverringerung der erfindungsgemäßen Spannzange.

Ein Verfahren zur Herstellung einer erfindungsgemäßen Spannzange ist in Anspruch 5 angegeben.

Mit diesem Verfahren kann die erfindungsgemäße Spannzange prozesssicher und kostengünstig hergestellt werden.

Um die Herstellung der Spannzange weiter zu vereinfachen, kann des Weiteren vorgesehen sein, dass beim Gießen ein Ansatz an den Spannzangenkörper angegossen wird, und dass der Spannzangenkörper beim Zerspanen an dem Ansatz gespannt wird. Dadurch lassen sich sämtliche zerspanenden Bearbeitungen in einer Aufspannung durchführen, was nicht nur die Genauigkeit wesentlich erhöht, sondern auch die Fertigungskosten verringert. Nach dem zerspanenden Endbearbeiten, beispielsweise in einer Dreh- oder Schleifmaschine, kann der Ansatz in einfacher Weise abgetrennt werden.

Wenn in einer weiteren vorteilhaften Ausgestaltung des Verfahrens der Schlitz durch Sägen hergestellt wird, so lässt sich derselbe sehr einfach und kostengünstig erzeugen.

Aus Anspruch 8 geht ein Spannfutter mit einem Futterkörper und einer in demselben aufgenommenen erfindungsgemäßen Spannzange hervor.

Mittels eines solchen Spannfutters lassen sich unterschiedliche Werkzeuge sicher und präzise spannen, wobei die einfache Handhabung sowie die einfache Fertigung des Spannfutters besonders herauszustellen sind.

Wenn in einer vorteilhaften Ausgestaltung des Spannfutters das Halteelement als Mutter ausgebildet ist und wenigstens eine Anlagefläche mit dem Futterkörper aufweist, so ergibt sich eine einfache Bedienbarkeit des Spannfutters beim Spannen des in der Bohrung der Spannzange aufgenommenen Werkzeugs. Durch die wenigstens eine Anlagefläche, die das Halteelement gegenüber dem Futterkörper aufweist, ergibt sich eine sehr exakte und insbesondere spielfreie Verbindung zwischen der Spannzange und dem Futterkörper.

Des Weiteren kann vorgesehen sein, dass der Futterkörper unterhalb der Spannzange einen Hohlraum aufweist, in dem ein Adapterring angeordnet ist. Dies ermöglicht eine Abstützung des Werkzeugs an seinem gesamten Umfang.

Nachfolgend ist ein Ausführungsbeispiel der Erfindung anhand der Zeichnung prinzipmäßig dargestellt.

Es zeigt:
- Fig. 1: eine Draufsicht auf eine erfindungsgemäße Spannzange nach dem Pfeil I aus Fig. 2;
- Fig. 2: eine Seitenansicht der Spannzange nach dem Pfeil II aus Fig. 1;
- Fig. 3: eine perspektivische Darstellung der Spannzange aus den Figuren 1 und 2;
- Fig. 4: eine Seitenansicht eines erfindungsgemäßen Spannfutters;
- Fig. 5: eine Draufsicht auf das Spannfutter gemäß dem Pfeil V aus Fig. 4;
- Fig. 6: einen Schnitt nach der Linie VI-VI aus Fig. 4; und
- Fig. 7: eine perspektivische Ansicht des Spannfutters aus den Figuren 4 bis 6.

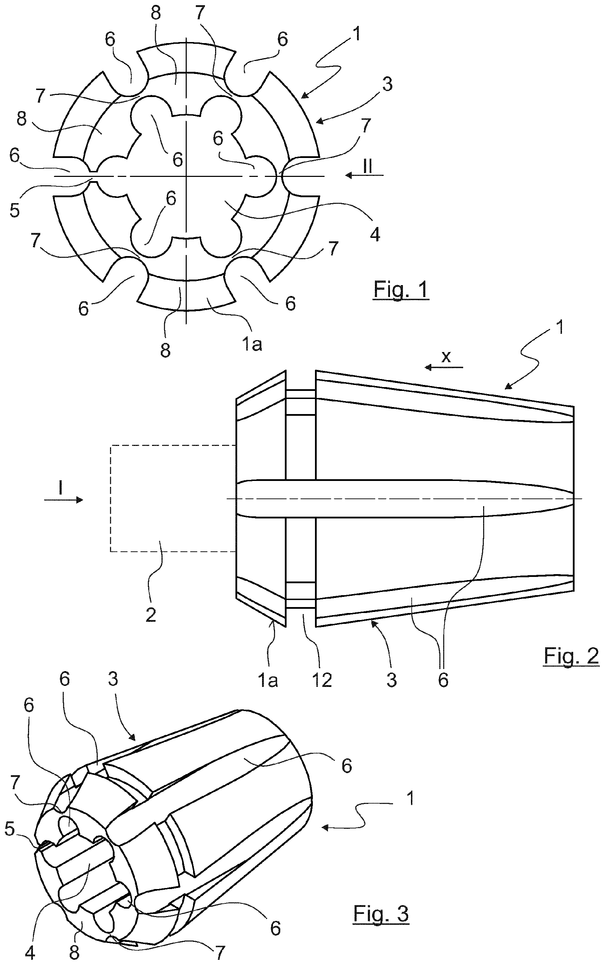

Fig. 1 zeigt eine Spannzange 1, die zum Spannen eines in Fig. 2 mittels einer gestrichelten Linie angedeuteten Werkzeugs 2 dient. Die Spannzange 1 weist einen Spannzangenkörper 3 auf, der eine Bohrung 4 aufweist, die in der in Fig. 2 eingezeichneten Längsrichtung x des Spannzangenkörpers 3 verläuft.

Des Weiteren weist der Spannzangenkörper 3 einen über seine gesamte Erstreckung in Längsrichtung x bzw. über seine gesamte Längserstreckung verlaufenden Schlitz 5 auf, der dafür sorgt, dass der Spannzangenkörper 3 und somit die gesamte Spannzange 1 verformt werden kann, um den Durchmesser der Bohrung 4 zu verändern, um auf diese Weise das Werkzeug 2 zu spannen.

Des Weiteren sind am Umfang bzw. am Durchmesser der Bohrung 4 sowie am Außenumfang des Spannzangenkörpers 3 jeweilige Ausnehmungen 6 vorgesehen, die jeweils paarweise zueinander bzw. jeweils in derselben Winkelposition angeordnet sind. Durch diese Anordnung der Ausnehmungen 6 werden zwischen den Ausnehmungen 6 jeweilige Stege 7 gebildet, die jeweilige, durch die Ausnehmungen 6 voneinander getrennte Abschnitte 8 des Spannzangenkörpers 3 miteinander verbinden. Durch die Stege 7 ergibt sich eine Elastizität des Spannzangenkörpers 3, so dass dieser bei Aufbringung einer entsprechenden Kraft verformt werden kann, um den Durchmesser der Bohrung 4 zu ändern.

Die Breite der Stege 7 beträgt in radialer Richtung des Spannzangenkörpers 3 im vorliegenden Fall 0,3 bis 0,8 mm, vorzugsweise 0,4 bis 0,6 mm. Des Weiteren ist insbesondere in Fig. 1 erkennbar, dass der Schlitz 5 wenigstens annähernd in der Mitte eines der Stege 7 verläuft.

Die Größe der in den Figuren 1 bis 3 dargestellten Spannzange 1 sowie die Größenverhältnisse der einzelnen Elemente derselben sind als reinbeispielhaft anzusehen. Da sich in einem Spannzangenkörper 3 mit ein und demselben Außendurchmesser Bohrungen 4 mit einem unterschiedlichen Durchmesser befinden können, kann auch die Größe der Ausnehmungen 6 variieren.

Der Spannzangenkörper 3 kann durch Gießen, insbesondere durch Feingießen, hergestellt sein. Hierzu kann ein geeignetes Material verwendet werden, das dem Fachmann geläufig ist. Nach dem Gießen können die Bohrung 4 und der Außendurchmesser des Spannzangenkörpers 3 durch Zerspanen endbearbeitet werden. Beispielsweise kommen hierfür Hartdrehen und Schleifen in Frage. Selbstverständlich sind auch Kombinationen mehrerer Zerspanungsverfahren möglich.

Um den Spannzangenkörper 3 bei seiner Endbearbeitung einfach spannen zu können, kann beim Gießen ein Ansatz an denselben angegossen werden, der beim Zerspanen zum Spannen des Spannzangenkörpers 3 dient.

Der Schlitz 5 wird vorzugsweise durch Sägen hergestellt. Es ist jedoch grundsätzlich auch möglich, denselben mittels Wasserstrahlschneiden, Laserschneiden oder auf ähnliche Weise herzustellen. Ein dabei eventuell entstehender Grat muss nicht unbedingt vollständig entfernt werden, da er nicht in die Bohrung 4 steht und daher beim Spannen des Werkzeugs 2 keine Störung darstellt.

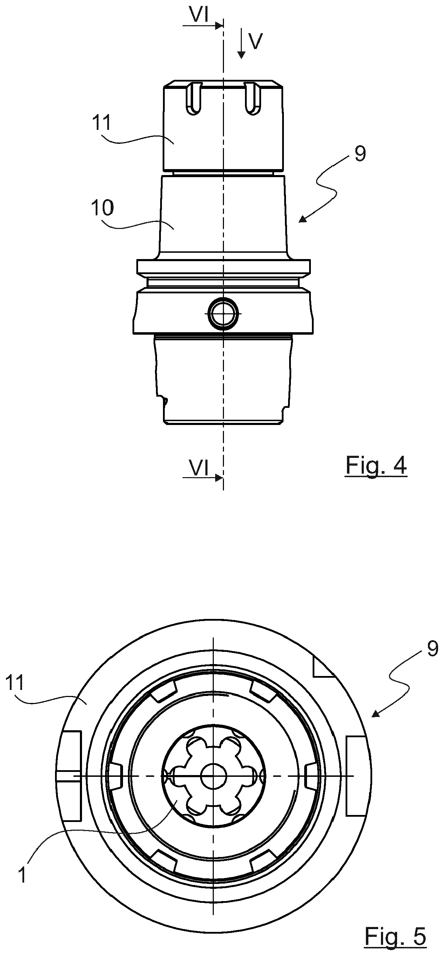

Die Figuren 4 bis 7 zeigen ein Spannfutter 9 mit einem Futterkörper 10 und eine in dem Futterkörper 10 aufgenommene Spannzange 1, wie sie oben beschrieben wurde. Zum Halten der Spannzange 1 in dem Futterkörper 10 des Spannfutters 9 dient ein Halteelement 11, das im vorliegenden Fall als Mutter ausgebildet ist, die nach dem Einführen der Spannzange 1 in eine konische Ausnehmung 10a des Futterkörpers 10 mit dem Futterkörper 10 verschraubt wird, um die Spannzange 1 in dem Futterkörper 10 zu halten. Die Mutter weist ein nicht näher bezeichnetes Innengewinde auf, das mit einem entsprechenden Außengewinde an dem Futterkörper 10 zusammenwirkt. Durch das Halteelement 11 wird eine Kraft auf die Spannzange 1 aufgebracht, welche die Spannzange 1 derart verformt, dass sich der Durchmesser der Bohrung 4 verringert, so dass auf ein darin angeordnetes Werkzeug 2 eine derartige Kraft aufgebracht wird, dass dieses in der Spannzange 1 gespannt wird.

Des Weiteren weist das Halteelement 11 einen nach innen gerichteten und eine Schrägfläche aufweisenden Vorsprung 11a auf, der mit einer entsprechenden Schrägfläche 1a an der Spannzange 1 zusammenwirkt und somit dafür sorgt, dass die Spannzange 1 in die Ausnehmung 10a des Futterkörpers 10 gepresst wird.

An seiner dem Vorsprung 11a abgewandten Seite weist das Halteelement 11 wenigstens eine, im vorliegenden Fall zwei Anlageflächen 11b und 11c auf, die an dem Außenumfang des Futterkörpers 10 anliegen und somit eine Führung für das Halteelement 11 bieten Die Anlageflächen 11b und 11c können daher auch als Führungsdurchmesser bezeichnet werden. Zwischen den beiden Anlageflächen 11b und 11c befindet sich im vorliegenden Fall das oben erwähnte Innengewinde des als Mutter ausgebildeten Halteelements 11. Die Anlageflächen 11b und 11c sind gegenüber dem Futterkörper 10 vorzugsweise mit einer Übergangspassung, wie zum Beispiel H7/h6, ausgeführt, wodurch sich ein sehr geringes Spiel zwischen dem Halteelement 11 und dem Futterkörper 10 ergibt. Beim Aufschrauben des Halteelements 11 auf den Futterkörper 10 wird die sich dazwischen befindende Spannzange 1 sowohl in radialer Richtung als auch in Längsrichtung x in geringem Maße verformt, wodurch sie eine Kraft in radialer Richtung nach außen auf den Futterkörper 10 ausübt. Der Futterkörper 10 wird dadurch in geringem Maße nach außen verformt bzw. aufgeweitet, sodass er sich an die beiden Anlageflächen 11b und 11c des Halteelements 11 anlegt und das ohnehin geringe Spiel zwischen diesen beiden Bauteilen vollständig herausgenommen wird. Dies führt zu einer sehr exakten Führung des Werkzeugs 2 in dem Spannfutter 9.

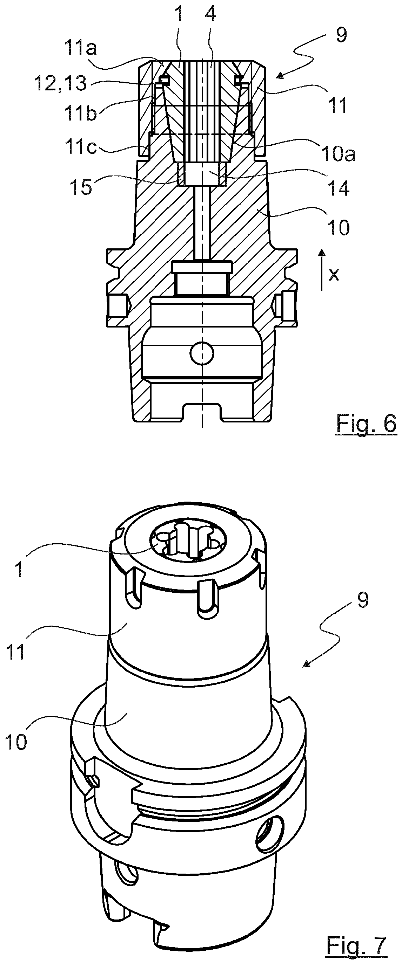

An ihrem Umfang weist die Spannzange 1 eine Nut 12 auf, in die ein in Fig. 6 dargestellter Ring 13 eingelegt wird, der ein sicheres Verbleiben der Spannzange 1 innerhalb des Futterkörpers 10 des Spannfutters 9 gewährleistet und beim Öffnen des Halteelements 11 dafür sorgt, dass die Spannzange 1 aus der Ausnehmung 10a des Futterkörpers 10 gelöst wird.

Unterhalb der Spannzange 1 weist der Futterkörper 10 einen Hohlraum 14 auf, in dem ein Adapterring 15 angeordnet ist, dessen Innendurchmesser an den Außendurchmesser des Werkzeugs 2 angepasst ist. Dadurch sorgt der Adapterring 15 dafür, dass das Werkzeug 2 auch in dem Bereich unterhalb der Spannzange 1 an seinem Außenumfang geführt ist.

## Patentansprüche

1. Spannzange (1) zum Spannen eines Werkzeugs (2), mit einem Spannzangenkörper (3), der eine in Längsrichtung (x) desselben verlaufende Bohrung (4) für das Werkzeug (2) aufweist,
**dadurch gekennzeichnet, dass**
der Spannzangenkörper (3) einen über seine gesamte Erstreckung in Längsrichtung (x) verlaufenden Schlitz (5) aufweist, und dass am Umfang der Bohrung (4) und am Außenumfang des Spannzangenkörpers (3) jeweils mehrere Ausnehmungen (6) vorgesehen sind, die jeweils paarweise derart zueinander angeordnet sind, dass zwischen den Ausnehmungen (6) Stege (7) gebildet sind.

2. Spannzange nach Anspruch 1,
**dadurch gekennzeichnet, dass**
die Breite der Stege (7) in radialer Richtung des Spannzangenkörpers (3) 0,3 bis 0,8 mm, vorzugsweise, 0,4 bis 0,6 mm, beträgt.

3. Spannzange nach Anspruch 1 oder 2,
**dadurch gekennzeichnet, dass**
der Schlitz (5) wenigstens annähernd in der Mitte eines der Stege (7) verläuft.

4. Spannzange nach Anspruch 1, 2 oder 3,
**dadurch gekennzeichnet, dass**
der Spannzangenkörper (3) als Gussteil ausgebildet ist.

5. Verfahren zur Herstellung einer Spannzange nach einem der Ansprüche 1 bis 4,
**dadurch gekennzeichnet, dass**
der Spannzangenkörper (3) durch Gießen hergestellt wird, und dass die Bohrung (4) und der Außendurchmesser des Spannzangenkörpers (3) durch Zerspanen endbearbeitet werden.

6. Verfahren nach Anspruch 5,
**dadurch gekennzeichnet, dass**
beim Gießen ein Ansatz an den Spannzangenkörper (3) angegossen wird, und dass der Spannzangenkörper (3) beim Zerspanen an dem Ansatz gespannt wird.

7. Verfahren nach Anspruch 5 oder 6,
**dadurch gekennzeichnet, dass**
der Schlitz (5) durch Sägen hergestellt wird.

8. Spannfutter (9) mit einem Futterkörper (10), mit einer in dem Futterkörper (10) aufgenommenen Spannzange (1) nach einem der Ansprüche 1 bis 4 und mit einem Halteelement (11) zum Halten der Spannzange (1) in dem Futterkörper (10).

9. Spannfutter nach Anspruch 8,
**dadurch gekennzeichnet, dass**
das Halteelement (11) als Mutter ausgebildet ist und wenigstens eine Anlagefläche (11b,11c) mit dem Futterkörper (10) aufweist.

10. Spannfutter nach Anspruch 8 oder 9,
**dadurch gekennzeichnet, dass**
der Futterkörper (10) unterhalb der Spannzange (1) einen Hohlraum (14) aufweist, in dem ein Adapterring (15) angeordnet ist.
